# EUROPEAN PATENT SPECIFICATION

(11) **EP 2 901 724 B1**
(45) Date of publication and mention of the grant of the patent: **05.07.2017**
(21) Application number: 12768783.8
(22) Date of filing: 28.09.2012
(51) Int. Cl.: H04W 4/04, G08G 1/16, H04W 72/00

(54) **CELLULAR-NETWORK BASED CONTROL OF VEHICLE-TO-VEHICLE COMMUNICATION**
AUF MOBILFUNKNETZ BASIERTE KONTROLLE VON FAHRZEUG-ZU-FAHRZEUG-KOMMUNIKATION
COMMANDE DE COMMUNICATION ENTRE VÉHICULES UTILISANT UN RÉSEAU CELLULAIRE

(43) Date of publication of application: 05.08.2015
(73) Proprietor: Telefonaktiebolaget LM Ericsson (publ), 164 83 Stockholm (SE)
(72) Inventor: MEYER, Michael, 52080 Aachen (DE); BRAHMI, Nadia, 52066 Aachen (DE); SACHS, Joachim, S-16853 Stockholm (SE)
(74) Representative: Ericsson
(86) International application number: PCT/EP2012/069187
(87) International publication number: WO 2014/048486

(56) References cited:
- FERRARI G ET AL: "Cross-network information dissemination in VANETs", ITS TELECOMMUNICATIONS (ITST), 2011 11TH INTERNATIONAL CONFERENCE ON, IEEE, 23 August 2011 (2011-08-23), pages 351-356, XP032064679, DOI: 10.1109/ITST.2011.6060081 ISBN: 978-1-61284-668-2
- YUFEI FENG ET AL: "Adaptive Beacon Rate Adjusting mechanism for safety communication in cooperative IEEE 802.11p-3G vehicle-infrastructure systems", COMMUNICATIONS (APCC), 2010 16TH ASIA-PACIFIC CONFERENCE ON, IEEE, PISCATAWAY, NJ, USA, 31 October 2010 (2010-10-31), pages 441-446, XP031843591, DOI: 10.1109/APCC.2010.5679988 ISBN: 978-1-4244-8128-6
- SCHMIDT R ET AL: "Exploration of adaptive beaconing for efficient intervehicle safety communication", IEEE NETWORK, IEEE SERVICE CENTER, NEW YORK, NY, US, vol. 24, no. 1, 1 January 2010 (2010-01-01), pages 14-19, XP011300410, ISSN: 0890-8044

## Description

### Technical Field

The present invention relates to methods for controlling vehicle-to-vehicle communication and to corresponding devices.

### Background

In vehicular transport and traffic management it is known to use Intelligent Transport System (ITS) applications for supporting vehicle operators. In this way, traffic safety can be improved by providing the vehicle operators with information which allows for making smarter decisions. Such ITS applications may involve transmitting information between different vehicles, e.g., in the form of a Cooperative Awareness Message (CAM). The information may be used for providing a warning or guidance to the operator of the vehicle, e.g., in the form of an emergency vehicle warning, an intersection collision warning, a slow vehicle warning, or a motorcycle approaching indication. The information may be transmitted using a radio technology for vehicle-to-vehicle (V2V) communication, e.g., as specified by the IEEE 802.11p standard, also referred to as WAVE (Wireless Access in Vehicular Environments). According to the IEEE 802.11 p standard, a wireless ad-hoc network may be formed between different vehicles.

CAMs are messages which are typically periodically broadcast by a vehicle to inform nearby vehicles about the current status of the vehicle. CAMs may for example be used for transmitting the current geographical position, speed, and/or basic attributes of the vehicle.

According to ETSI (European Telecommunications Standards Institute) TS 102637-2, CAMs should be broadcast within a local area around the vehicle (up to 1000 m) with a rate of 1-10 Hz. More specifically, CAMs may be generated by an entity referred to as CAM Management and passed to lower layers on the basis of the following rules:
- Maximum time interval between CAM generations is 1 s.
- Minimum time interval between CAM generations is 0.1s.
- A CAM is generated if the absolute difference between current heading of the vehicle and heading of the vehicle indicated in the last CAM is more than 4°.
- A CAM is generated if the distance between the current position of the vehicle and the position of the vehicle as indicated in the last CAM is more than 5 m.
- A CAM is generated if the absolute difference between the current speed of the vehicle and the speed of the vehicle as indicated in the last CAM is more than 1 m/s.
- The above CAM generation rules are checked every 100 ms.

A vehicle may receive CAMs from other vehicles and utilize the information provided in the CAMs for supporting its operator, e.g., by providing a warning or other guidance. In some scenarios, a high transmission rate of the CAMs, e.g., near the upper limit of 10 Hz, may be required for early hazard detection. This in turn may result in a high data load on the radio channel used for V2V communication. In some cases available capacity of the radio channel may be insufficient for such high data load, and a high collision risk, increased medium access delay, and/or unfair resource distribution among V2V communication devices located in the same communication range may occur. Similar problems may also occur with other types of V2V communication messages.

Prior art document "FS_ProSe USE CASE: Vehicle Use Cases", 3GPP draft S1-121147, discloses a method with operator-controlled sending of periodical awareness messages between vehicles. In particular, the operator supports the ProSe based communication between vehicles by notifying the latency requirements of each kind of message. Accordingly, there is a need for techniques which allow for efficiently controlling V2V communication.

### Summary

According to an embodiment of the invention, a method according to claim 1 is provided. According to a further embodiment of the invention, a method according to claim 5 is provided. According to a further embodiment of the invention, a device according to claim 12 is provided. Further detailed embodiments are defined in the dependent claims. In particular, claim 14 defines a communication system comprising a network node and the device as defined in claim 12.

### Brief Description of the Drawings

Fig. 1 schematically illustrates a V2V communication scenario in which concepts according to an embodiment of the invention may be applied.
Fig. 2 shows a flowchart for illustrating a method according to an embodiment of the invention.
Fig. 3 shows a flowchart for illustrating a further method according to an embodiment of the invention.
Fig. 4 schematically illustrates a V2V communication device according to an embodiment of the invention.
Fig. 5 schematically illustrates a cellular network node according to an embodiment of the invention.

### Detailed Description of Embodiments

In the following, the invention will be explained in more detail by referring to exemplary embodiments and to the accompanying drawings. The illustrated embodiments relate to concepts of controlling V2V communication between vehicle-based V2V communication devices. In these embodiments, it is assumed that V2V communication is based on a given radio technology, e.g., an ad-hoc WLAN (Wireless Local Area Network) according to IEEE 802.11 p, and that the V2V communication devices are further provided with access to a cellular network, e.g., as specified by 3GPP (Third Generation Partnership Project) or by 3GPP2. The cellular network may implement one or more radio technologies, such as GSM (Global System for Mobile communication), UMTS (Universal Terrestrial Mobile Telecommunications System) or Wideband CDMA (Code Division Multiple Access), CDMA2000, WiMaX, 3GPP SAE/LTE (Service Architecture Evolution / Long Term Evolution), and/or 3GPP LTE-Advanced. Accordingly, a V2V communication device as used in the illustrated embodiments typically supports at least two different radio technologies: a first radio technology for accessing the cellular network, and a second radio technology for performing V2V communication.

The cellular network may comprise several network nodes, which may be hierarchically structured. For example, the SAE/LTE architecture typically includes base stations, referred to as evolved Node B (eNB), Packet Data Network Gateways (PDN Gateways), and Mobility Management Entities (MMEs). In addition, several other network nodes may be provided that serve particular purposes. For other radio technologies of the cellular network, similar types of nodes and hierarchies may be provided. The cellular network typically has a structure which allows for efficient communication with mobile terminals, also referred to as UEs. In the scenarios as discussed in the following, these UEs also include V2V communication devices. Further, the cellular network may also allow for communication between UEs and servers that are part of the cellular network or hosted by the same operator and/or between UEs and servers in the Internet.

To support communication with the UEs, the cellular network may perform measurements or receive reports on measurements that are performed by UEs. In the cellular network, such measurements may for example be used for assigning radio resources to the UEs, for selecting an appropriate base station for establishing a connection to a certain UE, for selecting an appropriate radio technology for establishing a connection to a certain UE, or for utilizing enhanced transmission mechanisms such as MIMO (Multiple In / Multiple Out), eMBMS (evolved Multimedia Broadcast Multicast Services). Accordingly, the cellular network has access to various types of information which may be valuable for controlling V2V communication.

For example, measurement results that are available at base stations of the cellular network allow for obtaining detailed information about the situation of UEs in the cell supported by the base station. This information may for example include information on speed of a UE or the number of UEs on the cell. Other information may be derived from such basic presence and mobility information, e.g., a density of UEs and/or its variation, an average speed of UEs, or a probability of handovers between the cell and another cell.

Further, the cellular network may support functionalities for positioning UEs or functionalities for distributing information concerning the position of a UE, also referred to as Geo-messaging.

According to embodiments as described herein, a V2V communication device may use data from the cellular network for setting one or more control parameters of V2V communication by the second radio technology. In this way, the above-mentioned information available in one or more nodes of the cellular network may be utilized for efficiently controlling V2V communication. Such information may in particular relate to other V2V communication devices located in the nearby the V2V communication device, e.g., in or close to the V2V communication device's communication range when using the second radio technology or in the same control area of the cellular network, e.g., in the same cell.

Useful information for controlling V2V communication may be available from different types of nodes of the cellular network. Accordingly, as will be further explained below, the way of obtaining or aggregating the data to be provided to the V2V communication device may vary. The data can be aggregated and/or generated at base stations or at other network nodes higher up in the network hierarchy, e.g., at network nodes in the core network or even in external servers that are connected to the cellular network, e.g., via the Internet. Such external servers may be hosted by the same operator as the cellular network or by a different party.

Once the data is obtained, the first radio access technology may be used for providing the data to the V2V communication device. For this purpose, an appropriate interface or message format may be defined.

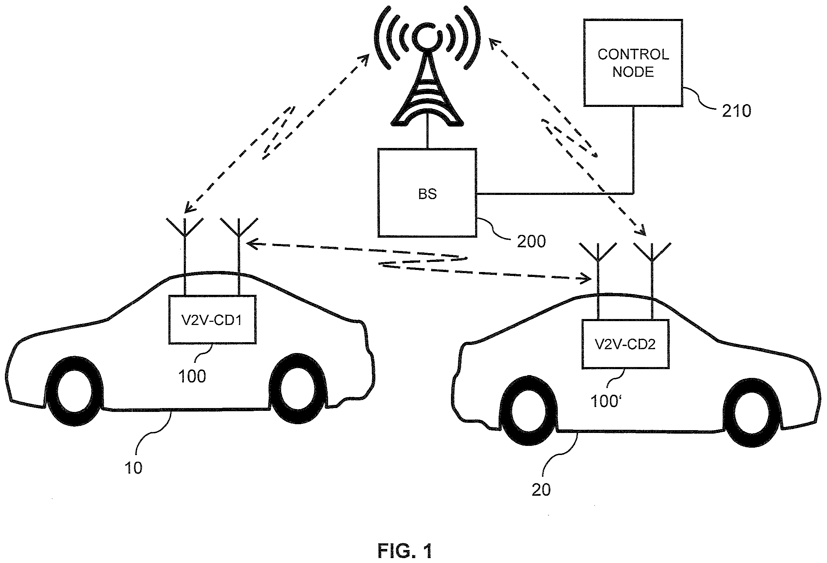

Fig. 1 schematically illustrates an exemplary V2V communication scenario in which concepts in accordance with the illustrated embodiments may be applied. By way of example, Fig. 1 shows a first vehicle 10 and a second vehicle 20. The vehicles 10, 20 may be road vehicles, such as automobiles or motorcycles, for passenger transport and/or for cargo transport. The first vehicle 10 is equipped with a first V2V communication device (V2V-CD1) 100, and the second vehicle 20 is equipped with a second V2V communication device (V2V-CD2) 100'.

The V2V communication devices 100, 100' support the above-mentioned first radio technology and second radio technology. Using the first radio technology, the first V2V communication device 100 and the second V2V communication device 100' can connect to the cellular network, in Fig. 1 represented by a base station 200 and a control node 210. Depending on the radio technology implemented by the cellular network, the base station 200 could for example be a GSM Radio Base Station (RBS), a UMTS Node B, or an LTE eNB. Similarly, the control node could be a GSM Base Station Controller (BSC), a UMTS Radio Network Controller (RNC), an LTE Mobility Management Entity (MME), or a Mobile Switching Center Server (MSC-S).

Using the second radio technology, the first V2V communication device 100 and the second V2V communication device 100' may perform V2V communication. This may include transmitting one or more V2V communication messages from the first V2V communication device 100 to the second V2V communication device 100' and/or transmitting one or more V2V communication messages from the second V2V communication device 100' to the first V2V communication device 100. Moreover, it is to be understood that further vehicles equipped with corresponding V2V communication devices could be present and could send or receive such V2V communication messages or connect to the cellular network. In such scenarios involving more than two V2V communication devices, the V2V communication messages may be broadcast to all other V2V communication devices within the communication range of the second radio technology. Further, it is possible to utilize forwarding of received V2V communication messages, thereby forming a multi-hop mesh type network of V2V communication devices. The V2V communication messages may for example correspond to CAMs as defined in ETSI TS 102637-2.

In the cellular network, e.g., in the base station 200 or some other network node, various types of information on UEs connected to the cellular network are available, including information on the first and second V2V communication devices 100, 100'. Using the first radio technology, data derived from such information may be provided from the cellular network to the V2V communication devices 100, 100' and may then be utilized by the V2V communication devices 100, 100' for controlling V2V communication by the second radio technology. For example, the rate of sending CAMs or a transmission power could be adjusted. If available, a multicast or broadcast service of the first radio technology, e.g., MBMS as provided in UMTS or LTE, may be used for transmitting the data to the V2V communication devices in a certain area, thereby allowing for efficient usage of the first radio technology.

In the following, the concepts as outlined above will be described in more detail with reference to a scenario in which the cellular network supports LTE as the first radio access technology. In this case, the data to be provided to the V2V communication devices may at least in part be aggregated or generated at the LTE base station, referred to as eNB.

In LTE, a state of UEs is maintained in the cellular network. When UEs are able to send and receive data, they are in an active state and known on a cell level. Thus, the eNB has accurate information about the number of active UEs in the cell. Further, such information can be exchanged with other eNBs using the X2 interface between eNBs, thereby allowing to obtain data on active UEs in other cells served by these other eNBs. Further, the eNB may receive measurement reports from UEs of its cell. Such measurement reports may for example convey information on a set of eNBs from which a given UE can receive signals and also on the strengths of such signals.

The eNB may also estimate the speed of UEs. At the eNB, such information may for example be used for deciding between a transmission mode suited for fast moving UEs and a transmission mode suited for slow moving or stationary UEs. The velocity of a UE may also be considered when deciding whether the UE should be handed over to another cell.

The eNB may aggregate and condition such information so as to produce data for controlling V2V communication. This could be accomplished by a corresponding software or hardware module of the eNB. The eNB may then send the data to V2V communication devices in the cell of the eNB, e.g., using MBMS transmission or some other LTE transmission mode.

At the V2V communication devices, the data are used for setting one or more control parameters of V2V communication by the second radio technology. For example, the rate of sending CAMs may be adjusted, e.g., by using a lower rate if the number or density of UEs in the same cell or area as the V2V communication device increases, e.g., exceeds a threshold. In this way, the risk of excessive radio capacity usage for CAM transmission by the second radio technology may be reduced. Similarly, a transmission power used for the second radio technology may be adjusted, e.g., by using a lower transmission power if the number or density of UEs in the same cell or area as the V2V communication device increases, thereby decreasing the transmission range of the second radio technology and avoiding colliding usage of the second radio technology by different V2V communication devices. Here, it should be noted that the CAM sending rate may be regarded as an application layer parameter while the transmission power may be regarded as a physical layer parameter of the second radio technology. That is to say, the data provided by the cellular network may be utilized at several layers of the V2V communication protocol stack.

The above mentioned types of information available to the eNB are only some examples of information which can be utilized for providing data for controlling V2V communication. According to a further example, information from eMBMS functionalities of the cellular network could be utilized. For example, such information could reflect the number of UEs in an MBMS area. Such eMBMS related information could be obtained from a Multicast Coordination Entity (MCE).

If the cellular network implements LTE radio technology, the data for controlling V2V communication could also be derived from information available to the MME or even be generated at the MME. As compared to an eNB, the MME may also provide information on non-active UEs, also referred to as idle UEs. Further, since the MME typically performs control functionalities in an area spanning multiple cells, it may efficiently provide information with respect to a control area which is larger than a single cell, e.g., a routing area, a tracking area, a MBMS service area, or an MBMS Single Frequency Network (MBSFN) area.

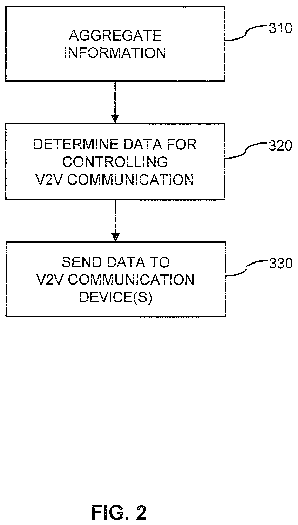

Fig. 2 shows a flowchart for illustrating a method which may be used for implementing the above concepts in a network node associated with a cellular network, i.e., a node of the cellular network or a node connected to the cellular network. The method may be used for controlling V2V communication as performed by at least one V2V communication device with access to the cellular network. The V2V communication device is assumed to be located onboard a vehicle, e.g., a road vehicle for passenger and/or cargo transport. The network node may correspond to an LTE base station, i.e., an eNB, to some other node of the cellular network, e.g., a control node such as an MME, RNC, or BSC, or to an external server, e.g., with an Internet connection to the cellular network. The cellular network implements a first radio technology, e.g., GSM, UMTS or Wideband CDMA, CDMA2000, WiMaX, 3GPP SAE/LTE, and/or 3GPP LTE-Advanced.

At step 310, the network node may aggregate information available in a cellular network. The information may include or be derived from presence and/or mobility information of the cellular network, or a number of users in the same control area of the cellular network as the V2V communication device. The control area may for example be a routing area, a tracking area, an MBMS service area, or an MBSFN area. The information may also include or be derived from a location of the V2V communication device as determined in the cellular network.

At step 320, the network node determines data for controlling V2V communication by a second radio technology. The second radio technology may for example be an ad-hoc network technology for V2V communication, such as defined by IEEE 802.11p.

The determination of the data at step 320 may be accomplished on the basis of the information as aggregated at step 310. For example, the data may be based on presence and/or mobility information of the cellular network, on a location of the V2V communication device as determined in the cellular network, and/or on statistical accident data. The data may also be based on a number of users in the same control area of the cellular network as the V2V communication device. Again, the control area may for example be a routing area, a tracking area, an MBMS service area, or an MBSFN area.

The determined data may include traffic density information, e.g., as derived from presence or mobility of the cellular network or from positioning functionalities of the cellular network.

Further, the data may include geographical information, e.g., concerning the environment of the V2V communication device. For example, such geographical information could indicate a road topology, e.g., straight, curved, or wavy. The geographical information may also indicate a rural or urban environment. Such geographical information may be available from digital maps, a geographic information system, or the like.

Further, the data may include traffic reporting information, e.g., as available from a traffic message channel or service or from roadside units or vehicles via Decentralized Environmental Notification (DEN) messages.

The data may also include an accident risk level. The accident risk level could for example be derived from historical data like accident statistics or based on daily risk pattern. The network node could also maintain or have access to a map of incident probabilities on roads. Such incidents may include accidents, but also road congestions and other incidents which affect the accident risk level. The accident risk level could also be estimated based on the level of distraction of the vehicle operator, e.g., considering a type of communication services or infotainment as delivered via the cellular network to the vehicle. For example, it could be considered whether the vehicle operator is engaged in a phone call or if a certain multimedia service is delivered to the vehicle.

The data may also include one or more control parameters or other parameters of the second radio technology, e.g., suggested transmission power, expected path loss, expected shadowing.

At step 330, the network node sends the data to at least one V2V communication device. The at least one V2V communication device is adapted to set, on the basis of the data, at least one control parameter of V2V communication by the second radio technology. For sending the data to the at least one V2V communication device, a unicast, multicast, and/or broadcast transmission mode of the first radio technology may be utilized. For example, such a multicast and/or broadcast transmission mode could be based on MBMS. When utilizing a unicast transmission mode, the data could be tailored with respect to an individual V2V communication device, e.g., based on its location, direction of movement, speed or the like. When utilizing a multicast or broadcast transmission mode multiple V2V communication devices could be addressed simultaneously, thereby improving efficiency. Further, a suitable protocol or message format may be used for sending the data to the at least one V2V communication device.

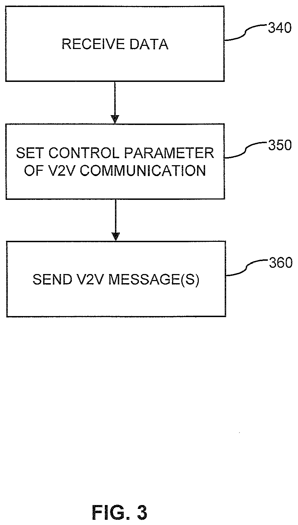

Fig. 3 shows a flowchart for illustrating a method which may be used for implementing the above concepts in a V2V communication device with access to a cellular network. The cellular network implements a first radio technology, e.g., GSM, UMTS or Wideband CDMA, CDMA2000, WiMaX, 3GPP SAE/LTE, and/or 3GPP LTE-Advanced, and the V2V communication device supports a second radio access technology for V2V communication, e.g., an ad-hoc network technology for V2V communication, such as defined by IEEE 802.11 p. The V2V communication device is assumed to be located onboard a vehicle, e.g., a road vehicle for passenger and/or cargo transport.

At step 340, the V2V communication device receives data from the cellular network. This may be accomplished by utilizing a unicast, multicast, and/or broadcast transmission mode of the first radio technology. For example, such a multicast and/or broadcast transmission mode could be based on MBMS. A suitable protocol or message format may be used for receiving the data from the cellular network. The received data may include traffic density information, geographical information, traffic reporting information, and/or an accident risk level. The data may also include the at least one control parameter and/or at least one further control parameter of the second radio access technology.

At step 350, the V2V communication device sets one or more control parameters of the second radio technology. This is accomplished on the basis of the data received from the cellular network. For this purpose, the control parameter may be derived from the received data, e.g., by processing information from the received data and optionally also information locally available at the V2V communication device. That is to say, the data from the cellular network may be utilized in combination with information locally available at the V2V communication device, e.g., from vehicle systems or from V2V communication, thereby allowing for making refined control parameter settings. In some scenarios, the control parameter may also be included in the received data.

The at least one control parameter may for example relate to a rate of sending a V2V communication message by the second radio technology, e.g., a rate of sending CAMs from the V2V communication device to other V2V communication devices. For example, if the received data indicate that the number or density of UEs, or specifically of V2V communication devices, in the area of the V2V communication devices is low, a high rate can be selected, because it can be assumed that the risk of a collision with transmissions from other V2V communication devices is low. In another example, the received data could indicate that the number or density of UEs, or specifically of V2V communication devices, in the area of the V2V communication devices is high, and a lower rate could be used in order to avoid interference or congestion in the second radio technology.

The at least one control parameter may also relate to a transmission power of the second radio technology, e.g., as used for sending a CAM or other type of V2V communication message. For example, if the received data indicate that the number or density of UEs, or specifically of V2V communication devices, in the area of the V2V communication devices is low, a high transmission power can be selected, because it can be assumed that the risk of a collision with transmissions from other V2V communication devices is low. In another example, the received data could indicate that the number or density of UEs, or specifically of V2V communication devices, in the area of the V2V communication devices is high, and a lower transmission power could be used in order to avoid interference or congestion in the second radio technology.

The at least one control parameter may also relate to a transmission range for sending a V2V communication message by the second radio technology. The transmission range may be a target range from the V2V communication device in which the V2V communication message can be received by other V2V communication devices. The transmission range may be controlled through transmission power, but further depend on additional parameters of the second radio technology such as signal-to-noise ratio, data rate, or the like.

The at least one control parameter may also relate to a sense range for detecting colliding usage of the second radio technology. For example, the sense range may be defined in terms of a carrier sense range from the V2V communication device, in which other V2V communication devices can detect a transmission and hence sense a busy channel. Ongoing transmissions may for example be detected by reception of packets or other data units with a signal strength corresponding to at least a given sensitivity threshold Pₛₑₙₛ. The distance where the received signal strength is equal to Pₛₑₙₛ defines the carrier sense range. The carrier sense range but also differently defined sense ranges for detecting colliding usage of the second radio technology is typically dependent on further parameters of the second radio technology, such as transmission power and/or path loss.

The at least one control parameter may also relate to a contention window for a collision handling mechanism of the second radio technology. For example, the second radio technology may use a collision handling mechanism which is based on CSMA (Carrier Sense Multiple Access). The contention window defines the basis of a back-off process used for medium access control. When the medium is sensed busy, the back-off process is started and the V2V communication device selects a random time value, also referred to as back-off time. This random time value may be up to the size of the contention window. A medium access by the V2V communication device is only allowed if the medium was sensed to be not busy for a time period corresponding to the back-off time. For this purpose, a back-off timer may initialized with a value corresponding to the back-off time, and decremented with every time slot in which the medium was sensed idle. As soon as the back-off timer expires, a medium access by the V2V communication device is allowed again. If a collision is detected, the contention window size may be increased, e.g., doubled until reaching a maximum value.

The at least one control parameter may also relate to time scheduling for sending a V2V communication message by the second radio technology. For example, the second radio access technology could be based on TDMA (Time Division Multiple Access), and the data could define one or more time slots which can be used by the V2V communication device for sending one or more V2V communication messages. In a similar fashion, other types of resources, e.g., based on frequency or code division, could be assigned to the V2V communication device.

At step 360, the V2V communication device may utilize the second radio technology to send one or more V2V communication messages. When sending the V2V communication messages, the control parameters as set in step 350 may be applied.

In the above methods, the V2V communication messages may be a CAMs. Information from the CAMs may be used for providing a warning or guidance to the operator or driver of the vehicle, e.g., in the form of an emergency vehicle warning, an intersection collision warning, a slow vehicle warning, or a motorcycle approaching indication. However, the methods could also be applied to other types of V2V communication messages.

It is to be understood that the methods of Figs. 2 and 3 may be combined with each other. In particular, the method of Fig. 2 may be used to send the data which is received at step 340 of Fig. 3.

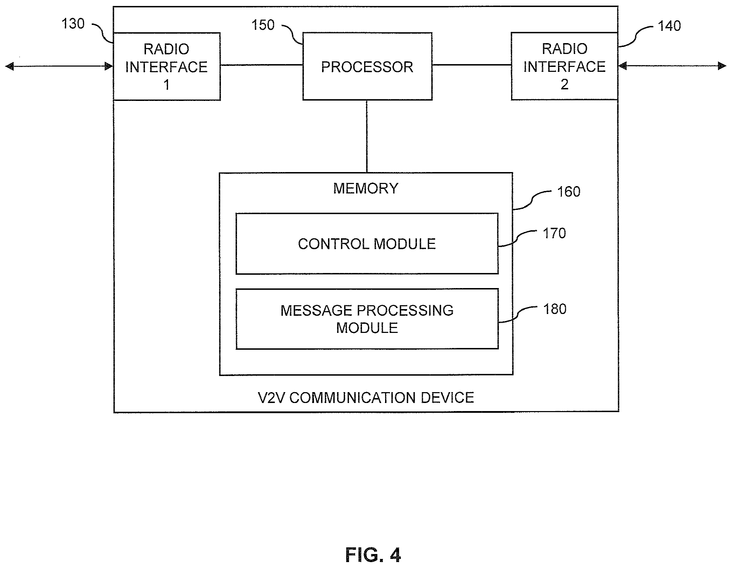

Fig. 4 illustrates an exemplary implementation of a V2V communication device. The V2V communication device of Fig. 4 may for example correspond to one of the V2V communication devices 100, 100' as illustrated in Fig. 1. The V2V communication device may be mounted onboard a vehicle, e.g., a road vehicle for passenger and/or cargo transport.

In the illustrated example, the V2V communication device includes a first radio interface 130 for communication with one or more other V2V communication devices. As mentioned above, this communication may utilize an ad-hoc network in accordance with IEEE 802.11p or other radio technology for ad-hoc V2V communication. Further, the V2V communication device includes a second radio interface 140 for communication with a cellular network. As mentioned above, the cellular network may support one or more cellular network radio technologies, e.g., GSM, UMTS or Wideband CDMA, CDMA2000, LTE, and/or LTE-Advanced.

Further, the V2V communication device includes a processor 150 coupled to the interfaces 130, 140 and a memory 160 coupled to the processor 150. The memory 160 may include a read-only memory (ROM), e.g., a flash ROM, a random-access memory (RAM), e.g., a Dynamic RAM (DRAM) or static RAM (SRAM), a mass storage, e.g., a hard disk or solid state disk, or the like. The memory 160 includes suitably configured program code to be executed by the processor 150 so as to implement the above-described functionalities of the V2V communication device. More specifically, the memory 160 may include a control module 170 so as to implement the above-described functionalities of setting one or more control parameters of the V2V radio technology. Further, the memory 160 may also include a message processing module 180 so as to implement the above-mentioned functionalities for receiving and evaluating messages including control data from the cellular network.

It is to be understood that the structure as illustrated in Fig. 4 is merely schematic and that the V2V communication device may actually include further components which, for the sake of clarity, have not been illustrated, e.g., further interfaces such as an interface with respect to vehicle systems. Also, it is to be understood that the memory 160 may include further types of program code modules, which have not been illustrated, e.g., program code modules for implementing known functionalities of a V2V communication device. According to some embodiments, also a computer program product may be provided for implementing functionalities of the node, e.g., in the form of a medium storing the program code to be stored in the memory 160.

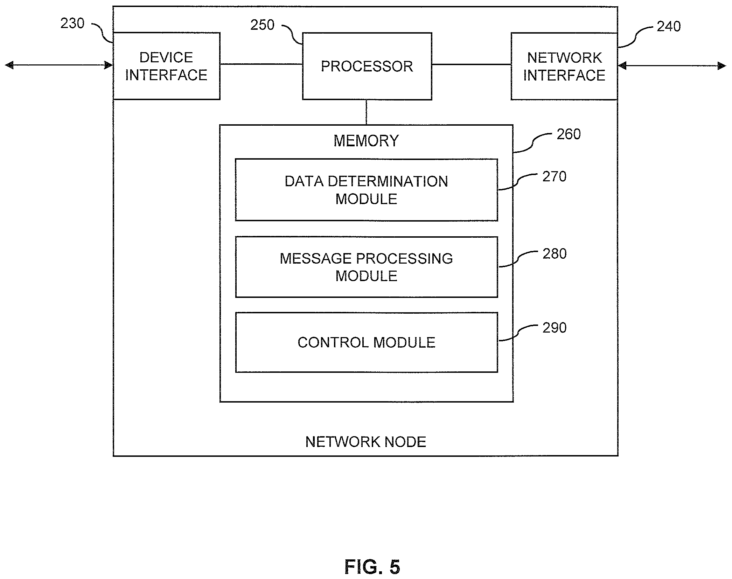

Fig. 5 illustrates an exemplary implementation of a network node associated with a cellular network. The network node may be part of the cellular network, e.g., correspond to a base station of the cellular network. However, similar functionalities could also be implemented in other nodes of the cellular network, e.g., in control or switching nodes of the cellular network or in core network nodes. The network node may also correspond to an external node connected to the cellular network, e.g., via the Internet. The network node may be configured to provide control data to V2V communication devices connected to the cellular network.

In the illustrated example, the network node includes a device interface 230 for communication with one or more V2V communication devices connected to the cellular network In addition, the network node may include a network interface 240 for communication with nodes of the cellular network. If the network node implements a base station of the cellular network, the device interface may correspond to a radio interface based on a radio technology supported by the cellular network. If the network node implements a more central node of the cellular network or if the network node corresponds to an external node, the device interface may provide a direct or indirect connection to one or more base stations of the cellular network, which in turn may provide a radio interface to one or more V2V communication devices.

Further, the node includes a processor 250 coupled to the interfaces 230, 240 and a memory 260 coupled to the processor 250. The memory 260 may include a ROM, e.g., a flash ROM, a RAM, e.g., a DRAM or SRAM, a mass storage, e.g., a hard disk or solid state disk, or the like. The memory 260 includes suitably configured program code to be executed by the processor 250 so as to implement the above-described functionalities for providing one or more V2V communication devices with control data. More specifically, the memory 260 may include a data determination module 270 for determining data to be provided to the V2V communication device(s), e.g., by aggregating information available in the network node and/or available from other nodes through the network interface 240. Further, the memory 260 may include a message processing module 280, e.g., for generating messages used for transmitting the control data to the V2V communication device(s) and/or for evaluating messages received from the V2V communication device(s). Further, the memory 260 may include a control module 290, e.g., for implementing generic control functionalities of the network node.

It is to be understood that the structure as illustrated in Fig. 5 is merely schematic and that the node may actually include further components which, for the sake of clarity, have not been illustrated, e.g., further interfaces. For example, multiple network interfaces could be provided which are configured to allow communication with different types of other nodes. Also, it is to be understood that the memory 260 may include further types of program code modules, which have not been illustrated, e.g., program code modules for implementing known functionalities of a base station, control node, switching node, or core network node of a cellular network. According to some embodiments, also a computer program product may be provided for implementing functionalities of the node, e.g., in the form of a medium storing the program code to be stored in the memory 260.

As can be seen, the concepts as described above may be used for efficiently controlling V2V communication, e.g., as performed in an ad-hoc radio network according to IEEE 802.11 p. In particular, the information from the cellular network may be utilized for alleviating impact of interference or congestion on V2V communication.

It is to be understood that the examples and embodiments as explained above are merely illustrative and susceptible to various modifications. For example, the concepts could be used in connection with various types of cellular networks, e.g., including the examples of cellular networks as mentioned herein, but also other types of cellular networks. Further, the cellular network could support multiple radio technologies for establishing a connection to the V2V communication device. In such cases, information for generating the data to be provided to the V2V communication device(s) could be derived from information available to these different radio technologies. This may be facilitated by multi-standard base stations that support more than one radio technology. The information from the different radio technologies could be jointly evaluated in order to provide the data for controlling V2V communication. If a base station of the cellular network also supports WLAN radio technology, e.g., in accordance with IEEE 802.11 or a standard derived therefrom, information related to the WLAN radio technology could be utilized as well and combined with information related to one or more cellular radio technologies supported by the base station. In the case of such support of WLAN radio technology, the WLAN radio technology could also be used for transmitting the data for controlling V2V communication.

Further, it is to be understood that any processing needed for providing the data for controlling V2V communication may be performed by a suitable node of the cellular network infrastructure or may be performed by a dedicated node which is supplied with the relevant information. Such dedicated nodes may be part of the cellular network or may be connected to the cellular network, e.g., via the Internet.

Moreover, it is to be understood that the above concepts may be implemented by using correspondingly designed software to be executed by one or more processors of an existing device, or by using dedicated device hardware. Also, the nodes as described herein may be implemented by a single device or by multiple devices, e.g., a device cloud or server farm.

## Claims

1. A method for controlling vehicle-to-vehicle communication, the method comprising:
a vehicle-to-vehicle communication device (100, 100') receiving data from a cellular network implementing a first radio technology, the data allowing determination of a risk level of collisions of transmissions from the vehicle-to-vehicle communication device (100, 100') and transmissions from other vehicle-to-vehicle communication devices (100, 100') over a second radio technology; and
on the basis of the data from the cellular network, the vehicle-to-vehicle communication device (100, 100') setting at least one control parameter of vehicle-to-vehicle communication by the second radio technology,
said at least one control parameter relating to a rate of periodically sending a vehicle-to-vehicle Cooperative Awareness Message by the second radio technology.

2. The method according to claim 1,
wherein the data are received through a multicast and/or broadcast transmission mode of the first radio technology.

3. The method according to claim 1 or 2,
wherein the data comprise at least one of a traffic density information, geographical information, traffic reporting information, and an accident risk level.

4. The method according to any one of the preceding claims,
wherein other control parameters set by the vehicle-to-vehicle communication device relate to a transmission power for sending a vehicle-to-vehicle Cooperative Awareness Message by the second radio technology, to a transmission range for sending a vehicle-to-vehicle Cooperative Awareness Message by the second radio technology, to a sense range for detecting colliding usage of the second radio technology, to a contention window for a collision handling mechanism of the second radio technology, and/or to time scheduling for sending a vehicle-to-vehicle Cooperative Awareness Message by the second radio technology.

5. A method for controlling vehicle-to-vehicle communication, the method comprising:
a network node (200; 210) associated with a cellular network implementing a first radio technology determining data for controlling vehicle-to-vehicle communication by a second radio technology, the data allowing determination of a risk level of collisions of transmissions from a vehicle-to-vehicle communication device (100, 100') and transmissions from other vehicle-to-vehicle communication devices (100, 100') over the second radio technology;
the network node (200; 210) sending the data to a vehicle-to-vehicle communication device (100, 100') connected to the cellular network, the vehicle-to-vehicle communication device (100, 100') being adapted to set, on the basis of the data, at least one control parameter of vehicle-to-vehicle communication by the second radio technology,
said at least one control parameter relating to a rate of periodically sending a vehicle-to-vehicle Cooperative Awareness Message by the second radio technology.

6. The method according to claim 5,
wherein the data are based on presence and/or mobility information of the cellular network.

7. The method according to claim 6,
wherein the data are based on a number of users in the same control area of the cellular network as the vehicle-to-vehicle communication device (100, 100').

8. The method according to any one of claims 5 to 7,
wherein the data are based on a location of the vehicle-to-vehicle communication (100, 100') device as determined in the cellular network.

9. The method according to any one of claims 5 to 8,
wherein the data are based on statistical accident data.

10. The method according to any one of claims 5 to 9,
wherein the data comprise at least one of a traffic density information, geographical information, traffic reporting information, and an accident risk level.

11. The method according to any one of claims 5 to 10,
wherein other control parameters set by the vehicle-to-vehicle communication device relate to a transmission power for sending a vehicle-to-vehicle Cooperative Awareness Message by the second radio technology, to a transmission range for sending a vehicle-to-vehicle Cooperative Awareness Message by the second radio technology, to a sense range for detecting colliding usage of the second radio technology, to a contention window for a collision handling mechanism of the second radio technology, and/or to time scheduling for sending a vehicle-to-vehicle communication message by the second radio technology.

12. A device (100, 100') for vehicle-to-vehicle communication, the device comprising:
a first radio interface (130) for communication with a cellular network implementing a first radio technology;
a second radio interface (140) for vehicle-to-vehicle communication by a second radio technology; and
a processor (150) configured to receive data from the cellular network, the data allowing determination of a risk level ofcollisions of transmissions from the device (100, 100') and transmissions from other vehicle-to-vehicle communication devices (100, 100') over the second radio technology, and to set, on the basis of the data from the cellular network, at least one control parameter of vehicle-to-vehicle communication by the second radio technology,
said at least one control parameter relating to a rate of periodically sending a vehicle-to-vehicle Cooperative Awareness Message by the second radio technology.

13. The device (100, 100') according to claim 12,
wherein the device (100, 100') is configured to operate according to a method as defined by any one of claims 1 to 4.

14. A communication system comprising a network node (200; 210) and a vehicle-to-vehicle communication device (100, 100') according to claim 12. the network node (200; 210) comprising an interface (230) for communication, via a cellular network implementing a first radio access technology, with the vehicle-to-vehicle communication device (100, 100'); and a processor (250) configured to determine data for controlling vehicle-to-vehicle communication by a second radio technology, the data allowing determination of a risk level of collisions of transmissions from the vehicle-to-vehicle communication device (100, 100') and from other vehicle-to-vehicle communication devices (100, 100') over the second radio technology, and to send the data to the vehicle-to-vehicle communication device (100, 100').

15. The communication system according to claim 14, wherein the network node (200; 210) is configured to operate according to a method as defined by any one of claims 5 to 11.

## Patentansprüche

1. Verfahren zur Steuerung von Fahrzeug-zu-Fahrzeug-Kommunikation, wobei das Verfahren umfasst, dass:
eine Fahrzeug-zu-Fahrzeug-Kommunikationsvorrichtung (100, 100') Daten von einem zellularen Netzwerk empfängt, das eine erste Funktechnologie implementiert, wobei die Daten eine Bestimmung einer Gefahrenstufe von Kollisionen von Übertragungen von der Fahrzeug-zu-Fahrzeug-Kommunikationsvorrichtung (100, 100') und Übertragungen von anderen Fahrzeug-zu-Fahrzeug-Kommunikationsvorrichtungen (100, 100') über eine zweite Funktechnologie ermöglichen; und
die Fahrzeug-zu-Fahrzeug-Kommunikationsvorrichtung (100, 100') basierend auf den Daten vom zellularen Netzwerk mindestens einen Steuerparameter von Fahrzeug-zu-Fahrzeug-Kommunikation durch die zweite Funktechnologie festlegt,
wobei sich der mindestens eine Steuerparameter auf eine Rate eines periodischen Sendens einer Fahrzeug-zu-Fahrzeug-Cooperative-Awareness-Nachricht durch die zweite Funktechnologie bezieht.

2. Verfahren nach Anspruch 1,
wobei die Daten durch einen Multicast- und/oder Broadcast-Übertragungsmodus der ersten Funktechnologie empfangen werden.

3. Verfahren nach Anspruch 1 oder 2,
wobei die Daten mindestens eine von einer Verkehrsdichteinformation, einer geografischen Information, einer Verkehrsmeldungsinformation und einer Unfallgefahrenstufe umfassen.

4. Verfahren nach einem der vorhergehenden Ansprüche,
wobei sich andere Steuerparameter, die von der Fahrzeug-zu-Fahrzeug-Kommunikationsvorrichtung festgelegt werden, auf eine Sendeleistung zum Senden einer Fahrzeug-zu-Fahrzeug-Cooperative-Awareness-Nachricht durch die zweite Funktechnologie, auf eine Sendereichweite zum Senden einer Fahrzeug-zu-Fahrzeug-Cooperative-Awareness-Nachricht durch die zweite Funktechnologie, auf eine Abtastreichweite zum Erkennen von kollidierender Nutzung der zweiten Funktechnologie, auf ein Konfliktfenster für einen Kollisionshandhabungsmechanismus der zweiten Funktechnologie und/oder auf Zeitplanung zum Senden einer Fahrzeug-zu-Fahrzeug-Cooperative-Awareness-Nachricht durch die zweite Funktechnologie beziehen.

5. Verfahren zur Steuerung von Fahrzeug-zu-Fahrzeug-Kommunikation, wobei das Verfahren umfasst, dass:
ein Netzwerkknoten (200; 210), der mit einem zellularen Netzwerk assoziiert ist, das eine erste Funktechnologie implementiert, Daten zum Steuern von Fahrzeug-zu-Fahrzeug-Kommunikation durch eine zweite Funktechnologie bestimmt, wobei die Daten eine Bestimmung einer Gefahrenstufe von Kollisionen von Übertragungen von einer Fahrzeug-zu-Fahrzeug-Kommunikationsvorrichtung (100, 100') und Übertragungen von anderen Fahrzeug-zu-Fahrzeug-Kommunikationsvorrichtungen (100, 100') über die zweite Funktechnologie ermöglichen;
der Netzwerkknoten (200; 210) die Daten an eine Fahrzeug-zu-Fahrzeug-Kommunikationsvorrichtung (100, 100') sendet, die mit dem zellularen Netzwerk verbunden ist, wobei die Fahrzeug-zu-Fahrzeug-Kommunikationsvorrichtung (100, 100') so ausgelegt ist, dass sie auf der Basis der Daten mindestens einen Steuerparameter von Fahrzeug-zu-Fahrzeug-Kommunikation durch die zweite Funktechnologie festlegt,
wobei sich der mindestens eine Steuerparameter auf eine Rate eines periodischen Sendens einer Fahrzeug-zu-Fahrzeug-Cooperative-Awareness-Nachricht durch die zweite Funktechnologie bezieht.

6. Verfahren nach Anspruch 5,
wobei die Daten auf Präsenz- und/oder Mobilitätsinformationen des zellularen Netzwerks basieren.

7. Verfahren nach Anspruch 6,
wobei die Daten auf einer Anzahl von Benutzern im gleichen Steuerbereich des zellularen Netzwerks wie die Fahrzeug-zu-Fahrzeug-Kommunikationsvorrichtung (100, 100') basieren.

8. Verfahren nach einem der Ansprüche 5 bis 7,
wobei die Daten auf einem Standort der Fahrzeug-zu-Fahrzeug-Kommunikationsvorrichtung (100, 100'), wie im zellularen Netzwerk bestimmt, basieren.

9. Verfahren nach einem der Ansprüche 5 bis 8,
wobei die Daten auf statistischen Unfalldaten basieren.

10. Verfahren nach einem der Ansprüche 5 bis 9,
wobei die Daten mindestens eine von einer Verkehrsdichteinformation, einer geografischen Information, einer Verkehrsmeldungsinformation und einer Unfallgefahrenstufe umfassen.

11. Verfahren nach einem der Ansprüche 5 bis 10,
wobei sich andere Steuerparameter, die von der Fahrzeug-zu-Fahrzeug-Kommunikationsvorrichtung festgelegt werden, auf eine Sendeleistung zum Senden einer Fahrzeug-zu-Fahrzeug-Cooperative-Awareness-Nachricht durch die zweite Funktechnologie, auf eine Sendereichweite zum Senden einer Fahrzeug-zu-Fahrzeug-Cooperative-Awareness-Nachricht durch die zweite Funktechnologie, auf eine Abtastreichweite zum Erkennen von kollidierender Nutzung der zweiten Funktechnologie, auf ein Konfliktfenster für einen Kollisionshandhabungsmechanismus der zweiten Funktechnologie und/oder auf Zeitplanung zum Senden einer Fahrzeug-zu-Fahrzeug-Kommunikationsnachricht durch die zweite Funktechnologie beziehen.

12. Vorrichtung (100, 100') zur Fahrzeug-zu-Fahrzeug-Kommunikation, wobei die Vorrichtung umfasst:
eine erste Schnittstelle (130) zur Kommunikation mit einem zellularen Netzwerk, das eine erste Funktechnologie implementiert;
eine zweite Schnittstelle (140) zur Fahrzeug-zu-Fahrzeug-Kommunikation durch eine zweite Funktechnologie; und
einen Prozessor (150), der so konfiguriert ist, dass er Daten vom zellularen Netzwerk empfängt, wobei die Daten eine Bestimmung einer Gefahrenstufe von Kollisionen von Übertragungen von der Vorrichtung (100, 100') und Übertragungen von anderen Fahrzeug-zu-Fahrzeug-Kommunikationsvorrichtungen (100, 100') über die zweite Funktechnologie ermöglichen, und auf der Basis der Daten vom zellularen Netzwerk mindestens einen Steuerparameter von Fahrzeug-zu-Fahrzeug-Kommunikation durch die zweite Funktechnologie festlegt,
wobei sich der mindestens eine Steuerparameter auf eine Rate eines periodischen Sendens einer Fahrzeug-zu-Fahrzeug-Cooperative-Awareness-Nachricht durch die zweite Funktechnologie bezieht.

13. Netzvorrichtung (100, 100') nach Anspruch 12,
wobei die Vorrichtung (100, 100') so konfiguriert ist, dass sie gemäß einem Verfahren nach einem der Ansprüche 1 bis 4 funktioniert.

14. Kommunikationssystem, umfassend einen Netzknoten (200; 210) und eine Fahrzeug-zu-Fahrzeug-Kommunikationsvorrichtung (100, 100") nach Anspruch 12,
wobei der Netzknoten (200; 210) eine Schnittstelle (230) zur Kommunikation über ein zellulares Netzwerk, das eine erste Funktechnologie implementiert, mit der Fahrzeug-zu-Fahrzeug-Kommunikationsvorrichtung (100, 100') und einen Prozessor (250) umfasst, der so konfiguriert ist, dass er Daten zum Steuern von Fahrzeug-zu-Fahrzeug-Kommunikation durch eine zweite Funktechnologie bestimmt, wobei die Daten eine Bestimmung einer Gefahrenstufe von Kollisionen von Übertragungen von der Fahrzeug-zu-Fahrzeug-Kommunikationsvorrichtung (100, 100') und Übertragungen von anderen Fahrzeug-zu-Fahrzeug-Kommunikationsvorrichtungen (100, 100') über die zweite Funktechnologie ermöglichen, und die Daten an die Fahrzeug-zu-Fahrzeug-Kommunikationsvorrichtung (100, 100') sendet.

15. Kommunikationssystem nach Anspruch 14,
wobei der Netzknoten (200, 210) so konfiguriert ist, dass er gemäß einem Verfahren nach einem der Ansprüche 5 bis 11 funktioniert.

## Revendications

1. Procédé de commande de communication de véhicule à véhicule, le procédé comprenant :
un dispositif de communication de véhicule à véhicule (100, 100') recevant des données en provenance d'un réseau cellulaire mettant en oeuvre une première technologie radio, les données permettant une détermination d'un niveau de risque de collisions de transmissions provenant du dispositif de communication de véhicule à véhicule (100, 100') et de transmissions provenant d'autres dispositifs de communication de véhicule à véhicule (100, 100') sur une deuxième technologie radio ; et
sur la base des données provenant du réseau cellulaire, le dispositif de communication de véhicule à véhicule (100, 100') réglant au moins un paramètre de commande de communication de véhicule à véhicule par la deuxième technologie radio,
ledit au moins un paramètre de commande concernant une fréquence d'envoi périodique d'un message de reconnaissance réciproque de véhicule à véhicule par la deuxième technologie radio.

2. Procédé selon la revendication 1,
dans lequel les données sont reçues par l'intermédiaire d'un mode de transmission de multidiffusion et/ou de diffusion de la première technologie radio.

3. Procédé selon la revendication 1 ou 2,
dans lequel les données comprennent au moins l'un d'une information de densité de circulation, d'une information géographique, d'une information de rapport de circulation, et d'un niveau de risque d'accident.

4. Procédé selon l'une quelconque des revendications précédentes,
dans lequel d'autres paramètres de commande réglés par le dispositif de communication de véhicule à véhicule concernent une puissance de transmission pour envoyer un message de reconnaissance réciproque de véhicule à véhicule par la deuxième technologie radio, une portée de transmission pour envoyer un message de reconnaissance réciproque de véhicule à véhicule par la deuxième technologie radio, une portée de détection pour détecter une collision d'utilisations de la deuxième technologie radio, une fenêtre de conflit pour un mécanisme de gestion de collision de la deuxième technologie radio, et/ou une programmation dans le temps pour envoyer un message de reconnaissance réciproque de véhicule à véhicule par la deuxième technologie radio.

5. Procédé de commande de communication de véhicule à véhicule, le procédé comprenant :
un noeud de réseau (200 ; 210) associé à un réseau cellulaire mettant en oeuvre une première technologie radio, déterminant des données pour commander une communication de véhicule à véhicule par une deuxième technologie radio, les données permettant une détermination d'un niveau de risque de collisions de transmissions provenant d'un dispositif de communication de véhicule à véhicule (100, 100') et de transmissions provenant d'autres dispositifs de communication de véhicule à véhicule (100, 100') sur la deuxième technologie radio ;
le noeud de réseau (200 ; 210) envoyant les données à un dispositif de communication de véhicule à véhicule (100, 100') relié au réseau cellulaire, le dispositif de communication de véhicule à véhicule (100, 100') étant apte à régler, sur la base des données, au moins un paramètre de commande de communication de véhicule à véhicule par la deuxième technologie radio,
ledit au moins un paramètre de commande concernant une fréquence d'envoi périodique d'un message de reconnaissance réciproque de véhicule à véhicule par la deuxième technologie radio.

6. Procédé selon la revendication 5,
dans lequel les données sont basées sur des informations de présence et/ou de mobilité du réseau cellulaire.

7. Procédé selon la revendication 6,
dans lequel les données sont basées sur un nombre d'utilisateurs dans la même zone de commande du réseau cellulaire que le dispositif de communication de véhicule à véhicule (100, 100').

8. Procédé selon l'une quelconque des revendications 5 à 7,
dans lequel les données sont basées sur un emplacement du dispositif de communication de véhicule à véhicule (100, 100') déterminé dans le réseau cellulaire.

9. Procédé selon l'une quelconque des revendications 5 à 8,
dans lequel les données sont basées sur des données statistiques d'accident.

10. Procédé selon l'une quelconque des revendications 5 à 9,
dans lequel les données comprennent au moins l'un d'une information de densité de circulation, d'une information géographique, d'une information de rapport de circulation et d'un niveau de risque d'accident.

11. Procédé selon l'une quelconque des revendications 5 à 10,
dans lequel d'autres paramètres de commande réglés par le dispositif de communication de véhicule à véhicule concernent une puissance de transmission pour envoyer un message de reconnaissance réciproque de véhicule à véhicule par la deuxième technologie radio, une portée de transmission pour envoyer un message de reconnaissance réciproque de véhicule à véhicule par la deuxième technologie radio, une portée de détection pour détecter une collision d'utilisations de la deuxième technologie radio, une fenêtre de conflit pour un mécanisme de gestion de collision de la deuxième technologie radio, et/ou une programmation dans le temps pour envoyer un message de communication de véhicule à véhicule par la deuxième technologie radio.

12. Dispositif (100, 100') de communication de véhicule à véhicule, le dispositif comprenant :
une première interface radio (130) pour une communication avec un réseau cellulaire mettant en oeuvre une première technologie radio ;
une deuxième interface radio (140) pour une communication de véhicule à véhicule par une deuxième technologie radio ; et
un processeur (150) configuré pour recevoir des données en provenance du réseau cellulaire, les données permettant une détermination d'un niveau de risque de collisions de transmissions provenant du dispositif (100, 100') et de transmission provenant d'autres dispositifs de communication de véhicule à véhicule (100, 100') sur la deuxième technologie radio, et régler, sur la base des données provenant du réseau cellulaire, au moins un paramètre de commande de communication de véhicule à véhicule par la deuxième technologie radio,
ledit au moins un paramètre de commande concernant une fréquence d'envoi périodique d'un message de reconnaissance réciproque de véhicule à véhicule par la deuxième technologie radio.

13. Dispositif (100, 100') selon la revendication 12,
dans lequel le dispositif (100, 100') est configuré pour fonctionner selon un procédé selon l'une quelconque des revendications 1 à 4.

14. Système de communication comprenant un noeud de réseau (200 ; 210) et un dispositif de communication de véhicule à véhicule (100, 100') selon la revendication 12, le noeud de réseau (200 ; 210) comprenant une interface (230) pour une communication, par l'intermédiaire d'un réseau cellulaire mettant en oeuvre une première technologie d'accès radio, avec le dispositif de communication de véhicule à véhicule (100, 100') ; et un processeur (250) configuré pour déterminer des données pour commander une communication de véhicule à véhicule par une deuxième technologie radio, les données permettant une détermination d'un niveau de risque de collisions de transmissions provenant du dispositif de communication de véhicule à véhicule (100, 100') et de transmissions provenant d'autres dispositifs de communication de véhicule à véhicule (100, 100') sur la deuxième technologie radio, et envoyer les données au dispositif de communication de véhicule à véhicule (100, 100').

15. Système de communication selon la revendication 14,
dans lequel le noeud de réseau (200 ; 210) est configuré pour fonctionner selon un procédé selon l'une quelconque des revendications 5 à 11.
